# EUROPÄISCHE PATENTSCHRIFT

(11) **EP 2 195 241 B1**
(45) Veröffentlichungstag und Bekanntmachung des Hinweises auf die Patenterteilung: **13.03.2013**
(21) Anmeldenummer: 08801958.3
(22) Anmeldetag: 10.09.2008
(51) Int. Cl.: B64D 41/00, B64D 47/00, B64D 11/00, B64D 11/04

(54) **VERFAHREN ZUM BEREITSTELLEN VON ENERGIE UND ENERGIEVERSORGUNGSEINHEIT DAFÜR**
METHOD FOR MAKING POWER AVAILABLE AND POWER SUPPLY UNIT THEREFOR
PROCÉDÉ DE FOURNITURE D'ÉNERGIE ET UNITÉ D'APPROVISIONNEMENT EN ÉNERGIE À CET EFFET

(30) Priorität: 02.10.2007 DE 102007047260; 14.11.2007 DE 102007054291
(43) Veröffentlichungstag der Anmeldung: 16.06.2010
(60) Teilanmeldung: 11008622.0
(73) Patentinhaber: Diehl Aerospace GmbH, 88662 Überlingen (DE)
(72) Erfinder: KNEPPLE, Ronny, 88662 Überlingen (DE); PETERSEN, Benno, 88634 Herdwangen (DE); SPETH, Bernd, 88662 Überlingen (DE)
(74) Vertreter: Diehl Patentabteilung
(86) Internationale Anmeldenummer: PCT/EP2008/007386
(87) Internationale Veröffentlichungsnummer: WO 2009/046805

(56) Entgegenhaltungen:
- EP-A- 0 957 026
- EP-A- 1 705 734
- EP-A2- 1 481 838
- WO-A-2005/057422
- DE-A1- 19 809 297
- FR-A- 2 340 878

## Beschreibung

Die Erfindung betrifft ein Verfahren zur Energie versorgung eines Flugzeugs sowie ein Flugzeug mit samt Energie versorgungseinrichtung gemäβ den Hanptansprüchen 1 und 5.

Derartige Maßnahmen sind in der DE 10 2005 054 883 A1 für Energieversorgungseinheiten mit Brennstoffzellen beschrieben. Die dienen dort zum Nachladen von Strom- und Wasserspeichern in verfahrbaren Getränkeautomaten für Einsatz in der Kabine eines Passagierflugzeuges. Im Zuge des Nachladens des elektrischen Akkumulators im Getränkeautomaten für dessen Betrieb wird auch das in der Brennstoffzelle als Reaktionsprodukt angefallene heiße Wasser zum Auflösen bzw. Aufbrühen von Getränken in den Gretränkeautomaten umgefüllt. Mehrere solcher Energieversorgungseinheiten sind in verschiedenen Bereichen des Flugzeugs, insbesondere bei den vorderen und hinteren Bordküchen und im Mittenbereich der Passagierkabine, installiert, um dort im Verlaufe der Bewirtung der Passagiere zum Nachladen der Gertränkeautomaten angefahren zu werden. Problematisch da sehr arbeitsaufwendig und vor allem hinsichtlich des flüssigen Wasserstoffes sicherheitskritisch ist allerdings das Nachliefern der Brennstoffe für die über die Kabine verteilt installierten Brennstoffzellen selbst. Das muss nach dem Landen der Maschine parallel zur Kabinenreinigung durch darauf spezialisiertes Fachpersonal erfolgen. Wohl auch daran scheitert bisher der tatsächliche Einsatz von Brennstoffzellen im Luftverkehr.

Aus der DE 198 09 297 A1 ist ein mobiler Kosmetikcontainer bekannt, welcher insbesondere in Flugzeugen und Zügen verwendet werden kann. Der mobile Kosmetikcontainer weist einen Energiespeicher, wie beispielsweise einen Akkumulator oder eine Brennstoffzelle, auf. Mit dem Energiespeicher kann der Kosmetikcontainer mit elektrischer Energie versorgt werden, um zur Körperpflege und Kosmetik verwendete Handhabungsgeräte, wie beispielsweise Haartrockner, Rasierapparate und dgl., zu betreiben.

Eine Energie versorgungseinheit für luftfahrzeuge is zudem aus der EP-A-O 957 026 belkannt. In Erkenntnis dieser Gegebenheiten liegt vorliegender Erfindung die technische Problemstellung zugrunde, eine derartige Energieversorgungseinheit mit weniger Betriebs-und Wartungsaufwand und dabei funktional sicherer und universeller einsetzen zu können.

Diese Aufgabe ist durch die im jeweiligen Hauptanspruch angegebenen wesentlichen Merkmale gelöst. Danach ist die Energieversorgungseinheit mit ihrem hier sog. Generator, nämlich einem Akkumulator oder vorzugsweise einer Brennstoffzelle samt den Tanks für deren Brennstoffe, nicht mehr fest in der Kabine installiert, sondern modulartig energieautark und komplett funktionstüchtig als austauschbare Einheit verfahrbar ausgelegt; nämlich eingebaut in ein Behältnis in Form eines der genormten Küchenwagen (Trolleys) für die Bordküche (die sog. Galley) oder in Form der für unterschiedliche Flugzeugmodelle standardisierten Gepäck- und Cargo-Container zur Aufnahme im Frachtraum eines Flugzeugs. Wie jene verfahrbaren Behälter werden diese Energieversorgungseinheiten nach der Landung einfach aus ihrer Arretierung in ihrer Aufnahmebucht gelöst und nach draußen verbracht. Benutzte derartige Energieversorgungseinheiten können dann extern gesammelt und in einem - insbesondere für Handhabung von Wasserstoff zum Betrieb von Brennstoffzellen geeigneten - Spezialbetrieb zeitentkoppelt nachgeladen werden. Währenddessen werden schon aufgefrischte Einheiten aus einem Vorrat zum Flugzeug angeliefert, wo sie mittels der herkömmlichen Handhabung von Trolleys bzw. Containern in die Küche bzw. in den Frachtraum an Bord des Flugzeugs verbracht werden. Mit dem Verriegeln der frischen Energieversorgungseinheit in ihrer Aufnahmeposition werden Andock-Schnittstellen der Energieversorgungseinheit an ein lokales Verbrauchernetz angeschlossen.

Die Lösung weist den besonderen Vorteil auf, die bestehende Infrastruktur, nämlich die Catering-Versorgungskette mit ihren hydraulischen Hubladern zum Ver- und Entsorgen der Bordküchen bzw. die verfahrbaren Rollbänder zum Be- und Entladen der Frachträume, auch für das Handling beim Austausch der Energieversorgungseinheiten einsetzen zu können. Deshalb muss keine zusätzliche Logistik mit ihren sicherheitsrelevanten Problemen des Rollfeldzuganges installiert werden.

Ein bestimmter der schmalen Speisetrolley-Andockbuchten in der Bordküche, bzw. ein bestimmter der Stauplätze im Ffachtraum, ist für den Anschluss der standardisierten Energieversorgungseinheit ausgelegt und reserviert. Hier ist die örtliche elektrische Verkabelung beim Andocken unter Verrasten für die mobile Schnittstelle zugänglich, insbesondere zur Versorgung der elektrischen Verbraucher in der Bordküche bzw. an anderen, zum Minimieren des Verkabelungsaufwandes vorzugsweise an der Küche benachbarten, Orten in der Kabine. Diese Verbraucher werden dann, unter signifikanter Entla tung des an einen Triebwerksgenerator angeschlossenen Bordnetzes, aus der mobilen, autarken Energieversorgungseinheit gespeist.

Gemäß einer Weiterbildung der Erfindung kann auch vorgesehen sein, unter Ersatz einer normalen Notstromversorgung bedarfsweise Notstromverbraucher auf die austauschbare Energieversorgungseinheit aufzuschalten, dann zweckmäßigerweise unter Abschalten ihrer verzichtbaren Lasten. Der bis dahin reguläre Betrieb testiert die Einsatzbereitschaft dieser autarken Notstromversorgung, die also nicht erst hochgefahren werden muss, sondern unmittelbar zur Verfügung steht. Es gewährleistet eine besondere Redundanz, wenn im Notstromfall die an sich unabhängig von einander arbeitenden Energieversorgungseinheiten verschiedener Bordküchen und / oder Cargo-Container auf das Notstromnetz zusammengeschaltet werden.

Insbesondere auf Langstreckenflügen kann ein Vorrat an betriebsfertig bestückten solchen Energieversorgungseinheiten, etwa bis zum Austausch gegen eine verbrauchte Einheit mittels eines internen Lifts Platz sparend über oder unter der Bordküche verstaut, oder anstatt der ersten Sitzreihe hinter der Bordküche, mitgeführt werden.

Am Zielflughafen bzw. anlässlich Zwischenlandungen bei Langstreckenflügen werden im Zuge des Austausches der Bordküchen-Trolleys bzw. des Entladens von Gepäck- oder Fracht-Containern auch die denselben Handhabungsstandard aufweisenden Energieversorgungseinheiten gegen solche mit frisch aufgeladenen Generatoren (Brennstoffzellen bzw. Akkumulatoren) ausgetauscht.

Ein abseits des Betankens des Flugzeuges erfolgendes, zentrales Nachladen der nach dem Landen aus dem Flugzeug entnommenen mobilen Energieversorgungseinheiten, also örtlich und zeitlich getrennt von der üblichen Flugzeugwartung und dadurch gleichermaßen sicherheits- wie kostenoptimierbar, gewährleistet höchste Sicherheit und bedarf weniger Fachpersonals, als eine dezentrale Gerätebetreuung in jedem der gerade gelandeten Flugzeuge.

Insoweit die Versorgung von Verbrauchern aus der austauschbaren Energieversorgungseinheit im Interesse kurzer Verkabelungen auf die unmittelbare Umgebung der Andockstation, in welcher der erfindungsgemäße Energie-Trolley wie ein sonstiger Küchenwagen mittels Knebeln gesichert ist, beschränkt ist, eröffnet die erfindungsgemäße Lösung auch größere Freizügigkeit bei der Umgestaltung großer Passagierkabinen insbesondere hinsichtlich des Ortes der mittleren Bordküche. Weil die Bordküche mit der austauschbaren Energieversorgungseinheit im Wesentlichen autark arbeitet, sind nur noch geringe Eingriffe in die Bordverkabelung erforderlich, wenn eine solche Küche im Zuge einer der häufig auftretenden Umkonfigurierungen, etwa zur vorübergehenden Vergrößerung eines bestimmten Kabinenbereiches um einige Sitzreihen, versetzt werden soll. Die Einzelplatzbeleuchtung wird zweckmäßigerweise aus den auswechselbaren Energieversorgungseinheiten in den stationären vorderen und hinteren Bordküchen mit versorgt, um Eingriffe in die Verkabelung aufgrund Verschiebung der mittleren Bordküche zu minimieren; deren Energieversorgungseinheit speist dann im wesentlichen nur die eigenen Verbraucher dieser Bordküche, und eventuell Sitzplatzkomforteinrichtungen in der unmittelbaren Umgebung.

Im Falle des Einsatzes von Brennstoffzellen-Generatoren kann im Zuge des Nachladens von kryogenen Flüssigkeitstanks mit deren Brennstoff zugleich das gegebenenfalls in der Energieversorgungseinheit zwischengespeicherte Reaktionswasser entsorgt werden - wenn es nicht zuvor, noch vor der Entnahme der Energieversorgungseinheit aus dem Flugzeugrumpf, in einen Kabinentank umgepumpt wurde, um als zusätzliches Brauchwasser für den Waschraum oder nach Aufbereitung für die Speisezubereitung zur Verfügung zu stehen.

Die erfindungsgemäße Lösung eröffnet auch ein individuelles Optimieren von nicht mehr über das Bordnetz erfolgender Energieversorgung. So kann das Nachladen der Energieversorgungseinheit für Kurzstreckenflüge mit kleineren oder weniger gefüllten Brennstofftanks für eine Brennstoffzelle bzw. mit weniger Akkuzellen erfolgen, weil keine gewärmten Mahlzeiten angeboten werden müssen, wobei die damit einhergehende Gewichtsverringerung den Flugtreibstoffbedarf reduziert.

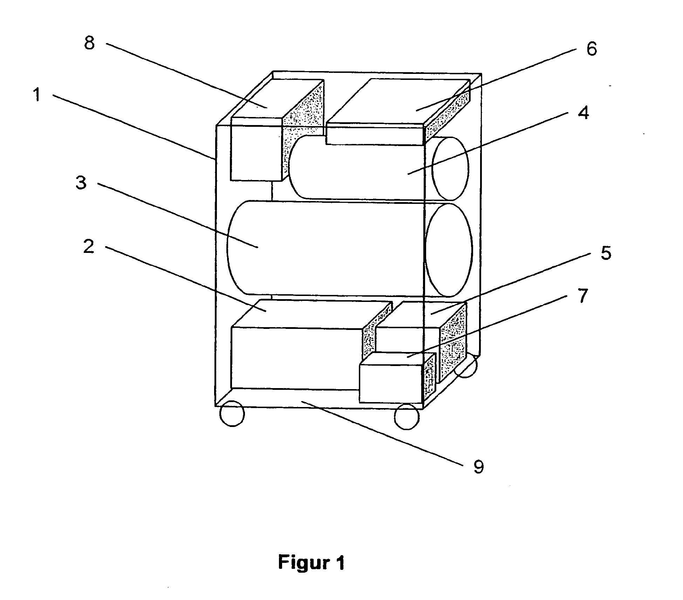

Zu näherer Veranschaulichung ist in der einzigen Figur der Zeichnung eine erfindungsgemäß ausgelegte mobile, austauschbare Energieversorgungseinheit als Rollwagen der standardisierten Abmessungen eines Bordküchenwagens (Galley Carts) für die Küchen-Dockingstationen (Aufnahmebuchten) in der bevorzugten Ausstattung mit einem Brennstoffzellen-Generator auf das Funktionswesentliche vereinfacht unmaßstäblich skizziert.

Ein verfahrbarer Container, hier bezeichnet als Trolley 1, ist - wie ein üblicher Bordküchen-Rollwagen mit Speisevorräten oder mit nach dem Flug zu entsorgendem Abfall - zur Aufnahme in einer der schmalen Buchten in der Bordküche ausgelegt, nun aber mit einem Brennstoffzellensystem aus wenigstens einer Brennstoff- oder Generator-Zelle 2 und mit Tanks für deren Brennstoffvorräte bestückt. Letztere weisen insbesondere einen Flüssigwasserstoff-Tank 3 und einen dagegen kleinervolumigen Flüssigsauerstoff-Tank 4 auf. Die von der Zelle 2 gelieferte elektrische Energie wird in einem Wandler 5 auf Nennspannung umgesetzt.

Energie für den Anlauf und das Abschalten der Zelle 2 sowie für den Betrieb einer Regelungs- und Überwachungseinheit 6, die vor allem der Funktionssicherung des Brennstoffzellensystems dient, ist in einem im Zuge des Nachfüllens von Brennstoff nachladbaren oder austauschbaren elektrischen Speicher 7 vorgehalten.

Die von der Zelle 2 generierte elektrische Energie wird unter Einfluss der Regelungs-und Überwachungseinheit 6 über eine Andock-Schnittstelle 8 in das Verbrauchernetz in der Umgebung der den Trolley 1 austauschbar aufnehmenden Docking-Station eingespeist. Die Schnittstelle 8 enthält nicht nur elektrische Ausgänge, wie insbesondere für 115 Volt Wechselspannung und 28 Volt Gleichspannung, sondern auch einen Wasserzulauf und Übergaben für die in der Brennstoffzelle 2 anfallende thermische Energie etwa in Form von Heißwasser und Wasserdampf. Die Anschlüsse erfolgen durch Verrasten im Zuge des Einschiebens und Verriegelns des Trolley 1 in seiner Aufnahmebucht (Docking-Station).

Über einen in der Skizze nur symbolisch angedeuteten Dienstbereich 9 des Trolley 1 sind verfahrenstechnische Komponenten für den Betrieb der Zelle 2 verteilt, wie Sensoren, Ventile und Wärmetauscher.

Bei den aus solcher austauschbarer, autarker Energieversorgungseinheit gespeisten Verbrauchern handelt es sich im Falle eines als Küchen-Container ausgelegten Trolley 1 vor allem um die Heiz- und Kühlaggregate für die in der Bordküche vorgehaltenen Speisen und Getränke sowie um die Küchenbeleuchtung.

Im Falle der Bestückung eines standardisierten Gepäck- oder Cargo-Containers mit einem, dann entsprechend größer auslegbaren, solchen Brennstoffzellensystem werden daraus zur Entlastung des Bordnetzes jedenfalls Heiz- und Kühlaggregate in anderen im Frachtraum an dessen Netz angeschlossenen Containern versorgt, und ferner nicht nur Verbraucher in der Bordküche, sondern vorzugsweise auch Verbraucher der Kabinenausstattung, die nach der Landung, also während des Austausches der Energieversorgungseinheit, gar nicht oder jedenfalls nicht unbedingt betrieben werden müssen, wie Stellmotore für Sitz- und Lüftungs-Komforteinrichtungen oder Steckdosen für Notebooks und andere Arbeits- oder Unterhaltungsgeräte.

Grundsätzlich kann im Rahmen vorliegender Erfindung die austauschbare Energieversorgungseinheit statt mit einem Brennstoffzellen-Generator auch mit einer Packung der neuen leistungsfähigeren Akkumulatoren bestückt sein, die allerdings derzeit noch ein größeres Gewicht als eine funktionstüchtig beschickte Brennstoffzelle erbringen.

Jedenfalls wird das Bordnetz von Verkehrsflugzeugen von einem ganz wesentlichen Verbraucher, nämlich der Bordküche mit ihren Heiz- und Kühlaggregaten, entlastet, wenn wenigstens eine autarke, problemlos handhabbare Energieversorgungseinrichtung, vorzugsweise mit einer Brennstoffzelle samt ihren Brennstofftanks und Spannungswandlern bestückt, in einem Küchenwagen standardisierter Abmessungen eingebaut ist, um im Zuge der Küchen-Ver- und -Entsorgung mittels Catering-Hubladern gleich mit ausgetauscht zu werden. Stattdessen oder zusätzlich kann eine solche autarke, mobile Energieversorgungseinheit auch in einen der standardisierten Gepäck- oder Cargo-Container zur Aufnahme im Frachtraum der Maschine installiert sein und dann insbesondere auch elektrische Heiz- und Kühlaggregate in anderen Containern speisen. Für eine mit Redundanz ausgestattete Notstromversorgung können mehrere derartig vorgehaltene Energieversorgungseinrichtungen zusammengeschaltet betrieben werden.

## Patentansprüche

1. Verfahren zum Bereitstellen von Energie in einem Verkehrsflugzeug, wobei eine Energieversorgungseinrichtung in Bauform und Austausch-Handhabung eines genormten Bordküchen-Trolleys oder eines standardisierten Gepäck- bzw. Cargo-Containers wie ein Trolley in der Bordküche bzw. wie ein Container im Frachtraum des Verkehrsflugzeuges austauschbar arretiert wird, **dadurch gekennzeichnet dass** zum Zwecke der Einspeisung der Energie in ein lokales Verbrauchemetz des Verkehrsflugzeugs die Energieversorgungseinrichtung über Andock-Schnitfstellen an das lokale Verbrauchemetz angeschlossen wird.

2. Verfahren nach Anspruch 1, wobei mit einem Verriegeln der Energieversorgungseinheit In ihrer Aufnahmeposition im Verkehrsflugzeug die Andock-Schnittstellen der Energieversorgungseinheit an das lokale Verbrauchemetz angeschlossen werden.

3. Verfahren nach Anspruch 1, wobei die Energieversorgungseinrichtung mobil und autark ausgebildet ist.

4. Verfahren nach Anspruch 1, wobei die Energieversorgungseinrichtung nach Landung des Verkehrsflugszeugs aus ihrer Arretierung in ihrer Aufnahmeposition gelöst und nach draußen verbracht wird, und wobei aufgefrischte Energieversorgungseinheiten aus einem Vorrat zum Verkehrsflugzeug angeliefert werden, wo sie mittels der herkömmlichen Handhabung von Trolleys bzw. Containern in die Küche bzw. in den Frachtraum an Bord des Verkehrsflugzeugs verbracht werden, und wobei mit einem Verriegeln der Energieversorgungseinheit in ihrer Aufnahmeposition im Verkehrsflugzeug die Andock-Schnittstellen der Energieversorgungseinheit an das lokale Verbrauchemetz angeschlossen werden.

5. Verkehrsflugzeug umfassend eine Energleversorgungseinrichtung zum Bereitstellen von Energie, eine Bordküche, einen Frachtraum und ein Verbrauchemetz, wobei
- die Energieversorgungseinrichtung ein Behältnis nach Art eines genormten Bordküchen-Trolleys (1) oder eines standardisierten Gepäck- oder Cargo-Containers mit einem Generator, in Form einer Brennstoffzelle (2) samt ihren Brennstoffvorräten oder in Form eines Akkumulators, und ferner Andock-Schnütstellen (8) umfasst, wobei die Andockschnittstellen ausgebildet und vorgesehen sind, zum Zwecke der Einspeisung der Energie in das Verbrauchemetz des Verkehrsflugzeugs die Energieversorgungseinrichtung auf das lokale Verbrauchemetz an Bord des Flugzeugs aufzuschalten; und
- die Bordküche eine spezielle Andockbucht bzw. der Frachtraum einen bestimmten Stauplatz aufweist, welche/r für den Anschluss der Energieversorgungseinheit an das Verbrauchemetz ausgelegt ist.

6. Verkehrsflugzeug nach Anspruch 5, wobei die Energleversorgungseinrichtung und die Andockbucht bzw. der Stauplatz derart ausgestaltet sind, dass mit Verriegeln der Energieversorgungseinrichtung in ihrer Aufnahmeposition die Andock-Schnittstellen der Energieversongungseinheit an das Verbrauchemetz angeschlossen werden.

7. Verkehrsflugzeug nach einem der Ansprüche 5 oder 6, wobei die Energieversorgungseinrichtung mobil und autark ausgebildet ist.

8. Verkehrsflugzeug nach Anspruch 5, wobei die Andock-Schnittstellen (8) ausgelegt sind, Heiz- und / oder Kühlaggregate sowie Beleuchtungseinrichtungen in der Bordküche bzw. im Frachtraum zu speisen.

9. Verkehrsflugzeug nach einem der Ansprüche 5 bis 8, wobei die Andock-Schnittstellen (8) ausgelegt sind, Komfortfunktionen an Sitzplätzen in der näheren Umgebung einer Bordküche zu speisen.

10. Verkehrsflugzeug nach einem der Ansprüche 5 bis 9, wobei die Energieversorgungseinrichtung mit Tanks (3, 4) für flüssigen Wasserstoff und flüssigen Sauerstoff zum Betrieb einer Brennstoffzelle (2) ausgestattet ist.

11. Verkehrsflugzeug nach dem vorangehenden Anspruch, wobei die Energieversorgungseinrichtung mit einem Speicher (7) und mit einer Regelungs- und Überwachungseinheit (6) sowie mit anlagetechnischen Komponenten (9) für autarken Betrieb ihrer Brennstoffzelle (2) ausgestattet ist

12. Verkehrsflugzeug nach einem der Ansprüche 5 bis 11, wobei die Energieversorgungseinrichtung ausgelegt ist, zum Zwecke der Bereitstellung einer Notstromversorgung mit wenigstens einer anderen solchen Energieversorgungseinheit an Bord des Flugzeugs bedarfsweise zusammengeschaltet zu werden.

13. Verkehrsflugzeug nach Anspruch 5, wobei die Andock-Schnittstellen (8) derart ausgebildet sind, dass mit Verriegeln der Energieversorgungseinrichtung in ihrer Aufnahmeposition einer Andockbucht der Bordküche bzw. eines Stauplatzes des Frachtraums die Andock-Schnittstellen (8) an das Verbrauchernetz angeschlossen werden.

## Claims

1. Method for providing power in a commercial aircraft, wherein a power supply device in the form of, and having the action of replacing, a standard galley trolley or a standardized baggage and/or cargo container, such as a trolley in the galley or such as a container in the cargo bay of the commercial aircraft, is locked such that it can be replaced, **characterized in that**, for the purpose of feeding the power to a local load network of the commercial aircraft, the power supply device is connected to the local load network via docking interfaces.

2. Method according to Claim 1, wherein the docking interfaces of the power supply unit are connected to the local load network by way of locking the power supply unit in its accommodation position in the commercial aircraft.

3. Method according to Claim 1, wherein the power supply device is of mobile and autonomous design.

4. Method according to Claim 1, wherein, after the commercial aircraft has landed, the power supply device is released from being locked in its accommodation position and is moved outside, and wherein recharged power supply units are delivered from a storage means to the commercial aircraft, where they are moved to the galley or to the cargo bay on-board the commercial aircraft by means of the conventional action of trolleys and/or containers, and wherein the docking interfaces of the power supply unit are connected to the local load network by way of locking the power supply unit in its accommodation position in the commercial aircraft.

5. Commercial aircraft comprising a power supply device for providing power, a galley, a cargo bay and a load network, wherein
- the power supply device comprises a container in the form of a standard galley trolley (1) or a standardized baggage or cargo container with a generator, in the form of a fuel cell (2) together with its fuel stores, or in the form of a rechargeable battery, and also docking interfaces (8), wherein the docking interfaces are designed and intended to connect the power supply device to the local load network on-board the aircraft for the purpose of feeding the power to the load network of the commercial aircraft; and
- the galley has a special docking bay or the cargo bay has a specific storage area, which docking bay/storage area is designed for the connection of the power supply unit to the load network.

6. Commercial aircraft according to Claim 5, wherein the power supply device and the docking bay or the storage area are designed in such a way that the docking interfaces of the power supply unit can be connected to the load network by way of locking the power supply device in its accommodation position.

7. Commercial aircraft according to either of Claims 5 and 6, wherein the power supply device is of mobile and autonomous design.

8. Commercial aircraft according to Claim 5, wherein the docking interfaces (8) are designed to feed heating and/or cooling assemblies and also lighting devices in the galley and/or in the cargo bay.

9. Commercial aircraft according to one of Claims 5 to 8, wherein the docking interfaces (8) are designed to feed convenience functions at seats in the relative vicinity of a galley.

10. Commercial aircraft according to one of Claims 5 to 9, wherein the power supply device is equipped with tanks (3, 4) for liquid hydrogen and liquid oxygen for operating a fuel cell (2).

11. Commercial aircraft according to the preceding claim, wherein the power supply device is equipped with a store (7) and with a control and monitoring unit (6) and also with system components (9) for autonomous operation of its fuel cell (2).

12. Commercial aircraft according to one of Claims 5 to 11, wherein the power supply device is designed to be connected, as required, to at least one other such power supply unit on-board the aircraft for the purpose of providing an emergency power supply.

13. Commercial aircraft according to Claim 5, wherein the docking interfaces (8) are designed in such a way that the docking interfaces (8) are connected to the load network by way of locking the power supply device in its accommodation position in a docking bay of the galley or in a storage area of the cargo bay.

## Revendications

1. Procédé de fourniture d'énergie dans un avion de ligne, dans lequel un dispositif d'approvisionnement en énergie avec la forme et la manipulation d'échange d'un trolley de cuisine de bord normalisé ou d'un conteneur de bagage ou de charge comme un trolley est calé de façon échangeable comme un trolley dans la cuisine de bord ou comme un conteneur dans la soute d' un avion de ligne, **caractérisé en ce que**, pour les besoins de la fourniture de l'énergie à un réseau de consommateurs local d'un avion de ligne, le dispositif d'approvisionnement en énergie est raccordé au réseau de consommateurs local au moyen d'interfaces de connexion.

2. Procédé selon la revendication 1, dans lequel les interfaces de connexion de l'unité d'approvisionnement en énergie sont raccordées au réseau de consommateurs local par un verrouillage de l'unité d'approvisionnement en énergie dans sa position de réception dans l'avion de ligne.

3. Procédé selon la revendication 1, dans lequel le dispositif d'approvisionnement en énergie est mobile et autarcique.

4. Procédé selon la revendication 1, dans lequel le dispositif d'approvisionnement en énergie est, après atterrissage de l'avion de ligne, détaché de son blocage dans sa position de réception et porté vers l'extérieur, et dans lequel des unités d'approvisionnement en énergie rafraîchies provenant d'une réserve sont fournies à l'avion de ligne, où elles sont portées, au moyen de la manipulation conventionnelle de trolleys ou de conteneurs, dans la cuisine ou dans la soute à bord de l'avion de ligne, et dans lequel les interfaces de connexion de l'unité d'approvisionnement en énergie sont raccordées au réseau de consommateurs local par un verrouillage de l'unité d'approvisionnement en énergie dans sa position de réception dans l'avion de ligne.

5. Avion de ligne comprenant un dispositif d'approvisionnement en énergie pour la fourniture d'énergie, une cuisine de bord, une soute et un réseau de consommateurs, dans lequel
- le dispositif d'approvisionnement en énergie comprend un contenant du type d'un trolley de cuisine de bord normalisé (1) ou d'un conteneur de bagage ou de charge standardisé avec un générateur, sous la forme d'une pile à combustible (2) accompagnée de ses réserves de combustible ou sous la forme d'un accumulateur, et en outre des interfaces de connexion (8), dans lequel les interfaces de connexion sont conçues et prévues, en vue d'injecter de l'énergie dans le réseau de consommateurs de l'avion de ligne, pour connecter le dispositif d'approvisionnement en énergie au réseau de consommateurs local à bord de l'avion; et
- la cuisine de bord présente une baie de connexion spéciale ou la soute présente un lieu de stockage déterminé, qui est conçu(e) pour le raccordement de l'unité d'approvisionnement en énergie au réseau de consommateurs.

6. Avion de ligne selon la revendication 5, dans lequel le dispositif d'approvisionnement en énergie et la baie de connexion ou le lieu de stockage sont configurés de telle manière que les interfaces de connexion de l'unité d'approvisionnement en énergie soient raccordées au réseau de consommateurs par verrouillage du dispositif d'approvisionnement en énergie dans sa position de réception.

7. Avion de ligne selon l'une des revendications 5 ou 6, dans lequel le dispositif d'approvisionnement en énergie est mobile et autarcique.

8. Avion de ligne selon la revendication 5, dans lequel les interfaces de connexion (8) sont conçues pour alimenter des groupes de chauffage et/ou de réfrigération ainsi que des dispositifs d'éclairage dans la cuisine de bord ou dans la soute.

9. Avion de ligne selon l'une des revendications 5 à 8, dans lequel les interfaces de connexion (8) sont conçues pour alimenter des fonctions de confort à des places assises situées à proximité immédiate d'une cuisine de bord.

10. Avion de ligne selon l'une des revendications 5 à 9, dans lequel le dispositif d'approvisionnement en énergie est équipé de réservoirs (3, 4) pour l'hydrogène liquide et l'oxygène liquide destinés au fonctionnement de la pile à combustible (2).

11. Avion de ligne selon la revendication précédente, dans lequel le dispositif d'approvisionnement en énergie est équipé d'une mémoire (7) et d'une unité de régulation et de surveillance (6) ainsi que de composants d'installations techniques (9) pour un fonctionnement autarcique de sa pile à combustible (2).

12. Avion de ligne selon l'une des revendications 5 à 11, dans lequel le dispositif d'approvisionnement en énergie est conçu dans le but d'être au besoin connecté avec au moins une autre unité d'approvisionnement en énergie de ce type à bord de l'avion en vue de fournir une alimentation électrique de secours.

13. Avion de ligne selon la revendication 5, dans lequel les interfaces de connexion (8) sont réalisées de telle manière que les interfaces de connexion (8) soient raccordées au réseau de consommateurs par verrouillage du dispositif d'approvisionnement en énergie dans sa position de réception d'une baie de connexion de la cuisine de bord ou d'un lieu de stockage de la soute.
